# EUROPÄISCHE PATENTSCHRIFT

(11) **EP 1 302 692 B1**
(45) Veröffentlichungstag und Bekanntmachung des Hinweises auf die Patenterteilung: **03.05.2006**
(21) Anmeldenummer: 02020124.0
(22) Anmeldetag: 07.09.2002
(51) Int. Cl.: F16F 9/36

(54) **Hydraulischer Stossdämpfer**
Hydraulic shock absorber
Amortisseur de chocs hydraulique

(30) Priorität: 16.10.2001 DE 10151023
(43) Veröffentlichungstag der Anmeldung: 16.04.2003
(73) Patentinhaber: ThyssenKrupp Bilstein Suspension GmbH, 58256 Ennepetal (DE)
(72) Erfinder: Adrian, Adolf, 58256 Ennepetal (DE); Nevoigt, Andreas, Dr., 58135 Hagen (DE)
(74) Vertreter: Adams, Steffen

(56) Entgegenhaltungen:
- WO-A-96/18052
- DE-A- 4 207 053
- DE-A- 4 432 305
- DE-A- 19 821 201
- FR-A- 2 695 973
- GB-A- 2 265 436
- US-B1- 6 253 661

## Beschreibung

Die Erfindung betrifft einen hydraulischen Stoßdämpfer mit einer in ein Stoßdämpferrohr oszillierend ein- und ausfahrenden Kolbenstange, bei dem die Kolbenstange mittels einer aus Blech hergestellten Dichtungs- und Führungseinheit gegenüber dem Stoßdämpferrohr abgedichtet und geführt wird, nach dem Oberbegriff des Anspruchs 1.

Derartige hydraulische Stoßdämpfer, die vorwiegend als Stoßdämpfer für Kraftfahrzeuge zwischen den Rädern und dem Fahrzeugaufbau eingesetzt werden, sind aus der DE 40 30 788 A1 bekannt. Die hier beschriebene Dichtungs- und Führungseinheit ist bereits sehr einfach aus verschiedenen Blechteilen und einer blechverstärkten Dichtung hergestellt.

Nachteilig bei dieser bekannten Dichtungs- und Führungseinheit müssen beim Zusammenbau des Stoßdämpfers viele Einzelteile der Dichtungs- und Führungseinheit zum einen über die Kolbenstange geschoben und zum anderen in das Stoßdämpferrohr eingebracht werden. Die Verbindung der Einzelteile der Dichtungs- und Führungseinheit erfolgt erst mit dem gesamten Zusammenbau des Stoßdämpfers, das heißt nach der DE 40 30 788 A1 nach dem nach innen Falzen des Endes des Stoßdämpferrohres über die Dichtungs- und Führungseinheit.

Aus der Entgegenhaltung DE 44 32 305 A1 ist ein Stoßdämpfer mit einer Dichtungs- und Führungseinheit bekannt, welche ein zweiteiliges Führungspaket aufweist. Die Kolbenstangendichtung ist als im Querschnitt U-förmiges Ringprofil mit zum Zylinderinnenraum weisenden Schenkeln ausgebildet. Bei dieser Dichtungs- und Führungseinheit ist die Dichtung nicht durch ein mit der Dichtung verbundenes Blech verstärkt, sondern die Dichtung wird durch die in Blechbauweise ausgebildeten Führungspakete unterstützt bzw. radial abgestützt.

Aus der FR-A-2 695 973 ist ein hydraulischer Stoßdämpfer mit den Merkmalen des Oberbegriffs des Patentanspruchs 1 bekannt. Bei diesem Stoßdämpfer weist die Dichtungs- und Führungseinheit ein Tragteil auf, welches formschlüssig mit einem Verstärkungsblech einer blechverstärkten Dichtung verbunden ist. Die formschlüssige Verbindung ist hierbei durch am Tragteil angeordnete und radial nach außen weisende Vorsprünge realisiert, welche in radial nach innen gerichtete Ausnehmungen des Verstärkungsbleches eingreifen.

Der Erfindung liegt die Aufgabe zugrunde, zum einen die Dichtungs- und Führungseinheit weiter zu vereinfachen und auch bei der Vormontage durch Schweißen sicherzustellen, dass eine sichere Funktion des Stoßdämpfers gewährleistet ist. Zum Weiteren soll die Montage der Dichtungs- und Führungseinheit als solches auch mit dem Stoßdämpfer vereinfacht werden.

Diese Aufgabe wird mit den Merkmalen des Anspruchs 1 gelöst. Vorteilhafte Aus- und Weiterbildungen sind in den Ansprüchen 2 bis 6 beschrieben.

Die erfindungsgemäße Lösung weist den Vorteil auf, dass die Dichtungs- und Führungseinheit auch als Blechbauteil vollständig vormontiert ist und somit beim Zusammenbau des Stoßdämpfers nicht mehrere Teile der Dichtungs- und Führungseinheit gehandhabt werden müssen, was die Gesamtmontage wesentlich vereinfacht.

Ein Ausführungsbeispiel der Erfindung ist in der Zeichnung dargestellt und wird im Folgenden näher beschrieben.

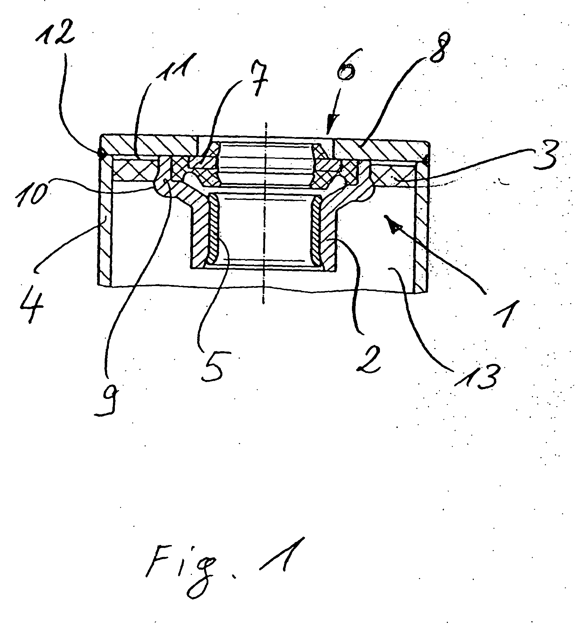

Die Fig. 1 bis 3 zeigen einen Schnitt durch das austrittsseitige Ende des Stoßdämpferrohres, durch das die nicht dargstellte Stoßdämpferstange austritt. Dieses Ende des Stoßdämpferrohres ist mit einer Dichtungs- und Führungseinheit verschlossen, welche nur den gedichteten Durchtritt der Kolbenstange zulässt. Die Kolbenstange kann dann oszillierend in das Stoßdämpferrohr ein- und ausfahren.

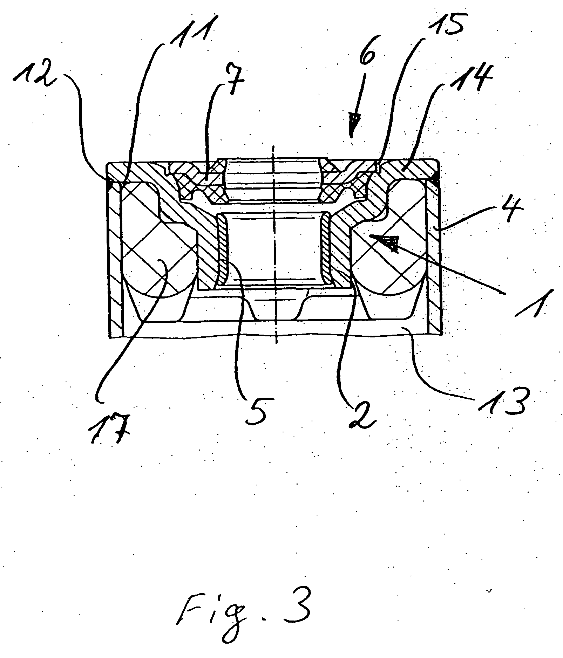

In den Fig. 1 und 3 werden unterschiedliche Bauformen der Dichtungs- und Führungseinheit und ihrer Anbindung an das Ende des Stoßdämpferrohres im Schnitt dargestellt.

In Fig. 1 ist das Tragteil 1 zweiteilig ausgebildet. Es besteht aus einer Buchse 2, die an ihrem oberen Rand von einer Scheibe 3 umgeben ist. Die Scheibe 3 stützt sich radial von innen am Stoßdämpferrohr 4 ab. Am Innendurchmesser der Buchse 2 des Tragteils 1 ist eine Führungsbuchse 5 aus einem Gleitmaterial angeordnet. Diese Führungsbuchse 5 dient zum radialen Führen der nicht dargestellten Kolbenstange.

Oberhalb der Führungsbuchse 5, also vom Stoßdämpferrohr 4 gesehen nach außen, ist eine Dichtung 6 angeordnet. Diese Dichtung 6 ist in allen Ausführungsbeispielen zwei- oder mehrlippig ausgebildet und weist zur axialen und radialen Verstärkung ein umspritztes oder einvulkanisiertes Verstärkungsblech 7 auf. Der Innendurchmesser des Verstärkungsbleches 7 ist geringfügig größer als der Innendurchmesser der Führungsbuchse 5, damit die Kolbenstange nicht am Verstärkungsblech 7 schleift.

Die äußere obere Fläche des Verstärkungsbleches 7 ist nicht vom elastischen Dichtungsmaterial umgeben und bildet somit eine Anlagefläche. Das Verstärkungsblech 7 kann aus einem Hartkunststoff oder aus Metall bestehen.

Auf dem nicht von Dichtungsmaterial umgebenen Abschnitt des Verstärkungsbleches 7 liegt - zumindest abschnittsweise - ein Auflageblech 8 auf. Die Dichtung 6 ist in einen Bund 9 der Buchse 2 eingepresst. Zum Zusammenbau der Dichtungs- und Führungseinheit wird die Buchse 2 mit dem Auflageblech 8 verklebt oder vorzugsweise von außen verschweißt. Beim Verschweißen von außen können Schweißrückstände an der Wurzel der Schweißnaht nicht in den Arbeitsraum 13 des Stoßdämpfers gelangen, da im anschließenden Raum, also innerhalb des Bundes 9 der Buchse 2, die Dichtung 6 liegt und die Wurzel der Schweißnaht gegenüber dem Innenraum des Stoßdämpfers verschließt. Mit dem Verschweißen von Buchse 2 und Auflageblech 8 ist die Dichtungs- und Führungseinheit vollständig montiert und bildet nur noch ein Bauteil bei der weiteren Montage. Die Scheibe 3 des Tragteils 1, die nicht mit der Buchse 2 verschweißt oder verklebt ist, kann sich nicht von der Buchse 2 lösen, da am unteren äußeren Durchmesser der Buchse 2 eine Wulst 10 angeordnet ist, über die die Scheibe 3 nicht nach unten bewegt werden kann.

Nach der vollständigen Montage des Stoßdämpfers wird die Dichtungs- und Führungseinheit in das Ende des Stoßdämpferrohrs 4 eingesetzt und auf dieses aufgelegt. Das Verschließen des fertig montierten Stoßdämpfers erfolgt durch Verschweißen des Auflageblechs 8 mit dem Stoßdämpferrohr 4. Das Verschweißen erfolgt von außen. Zwischen dem Auflageblech 8 und der Scheibe 3 verbleibt ein im Wesentlichen abgedichteter Ringraum 11. Dieser Ringraum 11 liegt im Wurzelbereich der Schweißnaht 12. Sollten an der Wurzel der Schweißnaht 12 sich eventuell lösende Schweißrückstände vorhanden sein, so können diese nicht in den Arbeitsraum 13 des Stoßdämpfers oder in den Bereich der Dichtung 6 oder der Führungsbuchse 5 gelangen, da sie im Ringraum 11 eingeschlossen sind.

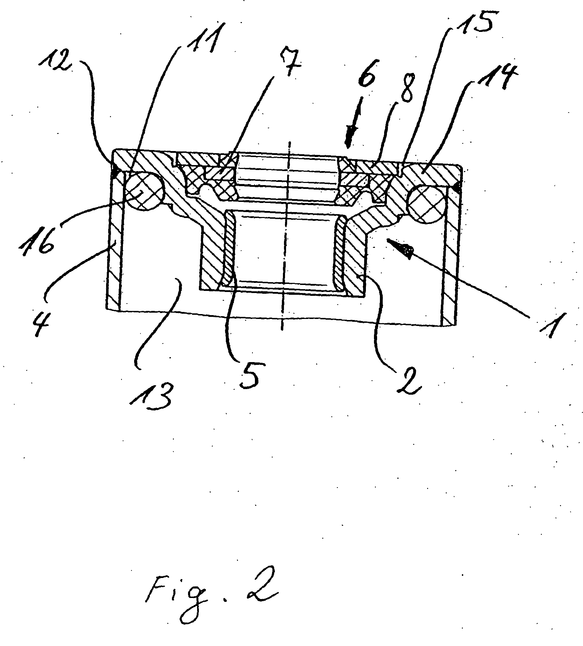

Die Ausbildung der Dichtungs- und Führungseinheit nach Fig. 2 ist ähnlich der Ausbildung nach Fig. 1. Bei dieser Ausbildung ist das Tragteil 1 einteilig ausgebildet. Die Buchse 2 setzt sich direkt über einen Kragen 14 bis zum Außendurchmesser des Stoßdämpferrohres 4 fort. Auch bei dieser Ausbildung ist das Verstärkungsblech 7 nicht vollständig mit Dichtungsmaterial umgeben. Es bleibt im gleichen Bereich wie bei der Ausbildung nach Fig. 1 frei. Auf diesen Bereich kann sich wiederum ein Auflageblech 8 auflegen. Das Auflageblech 8 weist jedoch einen geringeren Durchmesser auf als das Auflageblech 8 nach Fig. 1. Es liegt in einem Rezess 15 des Tragteils 1. Der Rezess 15 ist für eine Schweißnaht vorbereitet. Auflageblech 8 und Tragteil 1 werden in diesem Bereich miteinander von außen verschweißt. Eventuell sich lösende Schweißrückstände im Wurzelbereich der Schweißnaht können nicht in den Arbeitsraum 13, den Bereich der Dichtung 6 bzw. der Führungsbuchse 5 gelangen, da der Wurzelbereich der Schweißnaht durch die eingepresste Dichtung 6 verschlossen ist. Anstatt das Auflageblech 8 mit dem Tragteil 1 zu verschweißen, können diese beiden Teile auch miteinander durch Verkleben oder Verstemmen verbunden werden.

Nach der kompletten Montage des Stoßdämpfers wird im vorliegenden Fall das Tragteil 1 mit dem Stoßdämpferrohr 4 verschweißt. Die Verschweißung erfolgt wiederum von außen. Der Wurzelbereich der Schweißnaht 12 ist wiederum gegenüber dem Arbeitsraum 13 und damit gegenüber der Dichtung 6 bzw. der Führungsbuchse 5 abgedichtet. Der Ringraum 11, in dem eventuelle Schweißrückstände eingeschlossen sind, wird in Fig. 2 durch das Einsetzen eines Dichtringes 16 gebildet.

Die in Fig. 3 dargestellte Ausbildung der Dichtungs- und Führungseinheit stellt eine Alternativausbildung zu der in Fig. 2 gezeigten Dichtungs- und Führungseinheit dar. Bei dieser Ausbildung ist das Versteifungsblech 7 einteilig derartig ausgebildet, dass es gleichzeitig die Funktion des Auflagebleches 8 gemäß Fig. 2 mit übernimmt.

Anstatt des Einlegens eines Dichtrings 16 gemäß Fig. 2 zur Bildung des Ringraums 11 wird in Fig. 3 ein Zuganschlag 17 aus elastischem Material eingesetzt. Die Funktionen und der Zusammenbau der Dichtungs- und Führungseinheit gemäß Fig. 3 entsprechen der Funktion und dem Zusammenbau der Dichtungs- und Führungseinheit gemäß Fig. 2.

Alle beschriebenen Schweißungen können als Punkt- oder Nahtschweißungen erfolgen. Die Schweißnähte müssen nicht dicht sein, da die Abdichtung der Einzelbauteile nach außen durch innen liegende Dichtungen oder Dichtungsteile erfolgt.

### Bezugszeichenliste

- 1.: Tragteil
- 2.: Buchse
- 3.: Scheibe
- 4.: Stoßdämpferrohr
- 5.: Führungsbuchse
- 6.: Dichtung
- 7.: Verstärkungsblech
- 8.: Auflageblech
- 9.: Bund
- 10.: Wulst
- 11.: Ringraum
- 12.: Schweißnaht
- 13.: Arbeitsraum
- 14.: Kragen
- 15.: Rezess
- 16.: Dichtring
- 17.: Zuganschlag

## Patentansprüche

1. Hydraulischer Stoßdämpfer mit einer in ein Stoßdämpferrohr (4) oszillierend ein- und ausfahrenden Kolbenstange, bei dem die Kolbenstange mittels einer aus Blech hergestellten Dichtungs- und Führungseinheit gegenüber dem Stoßdämpferrohr abgedichtet und geführt wird, wobei die Dichtungs- und Führungseinheit aus einem Tragteil (1) mit einem Führungskragen, der eine Führungsbuchse (5) aufnehmen kann und einer blechverstärkten Dichtung (6) besteht und wobei das Tragteil (1) und/oder das Verstärkungsblech (7) der Dichtung (6) ein- oder mehrteilig ausgebildet ist, wobei wenigstens ein Teil des Tragteils (1) mit wenigstens einem Teil des Verstärkungsbleches (7) verbunden ist, **dadurch gekennzeichnet, dass** die Verbindung des Tragteils (1) mit dem Verstärkungsblech (7) als Schweißung ausgebildet ist, die von außen erfolgt, und dass die Wurzel der Schweißnaht zum Innenraum des Stoßdämpfers hin mittels eines Einbauteils abgedichtet ist.

2. Hydraulischer Stoßdämpfer nach Anspruch 1, **dadurch gekennzeichnet, dass** die Abdichtung der Schweißnaht zum Innenraum hin durch einen Teil der Dichtung (6) erfolgt.

3. Hydraulischer Stoßdämpfer nach Anspruch 1 oder Anspruch 2, **dadurch gekennzeichnet, dass** das Verstärkungsblech (7) der Dichtung (6) aus zwei aufeinander liegenden Ringblechen gebildet ist.

4. Hydraulischer Stoßdämpfer nach Anspruch 3, **dadurch gekennzeichnet, dass** das außen liegende Ringblech (Auflageblech 8) sich bis zum Stoßdämpferrohr (4) erstreckt und mit diesem verbunden ist.

5. Hydraulischer Stoßdämpfer nach einem oder mehreren der Ansprüche 1 bis 4, **dadurch gekennzeichnet, dass** die Dichtungs- und Führungseinheit mit dem Stoßdämpferrohr (4) mittels Schweißen von außen miteinander verbunden ist und die Wurzel der Schweißnaht (12) zum Innenraum des Stoßdämpfers hin mittels eines Einbauteils abgedichtet ist.

6. Hydraulischer Stoßdämpfer nach Anspruch 5, **dadurch gekennzeichnet, dass** die Wurzel der Schweißnaht (12) zum Innenraum des Stoßdämpfers hin mittels eines Bleches, eines Dichtrings (16) oder eines Zuganschlags (17) aus elastischem Material abgedichtet ist.

## Claims

1. Hydraulic shock absorber having a piston rod which travels in an oscillating manner into and out of a shock absorber pipe (4), wherein the piston rod is guided and sealed with respect to the shock absorber pipe by means of a sealing and guiding unit made out of sheet metal, wherein the sealing and guiding unit consists of a support part (1) having a guide collar, which can receive a guide bushing (5), and a sheet metal-reinforced seal (6) and wherein the support part (1) and/or the reinforcing metal sheet (7) of the seal (6) is formed in one or multiple parts, wherein at least one part of the support part (1) is connected to at least one part of the reinforcing metal sheet (7), **characterised in that** the connection between the support part (1) and the reinforcing metal sheet (7) is formed as a weld-connection which is produced from the exterior, and **in that** the root of the weld seam is sealed towards the interior of the shock absorber by means of a mounting part.

2. Hydraulic shock absorber as claimed in Claim 1, **characterised in that** the weld seam is sealed towards the interior by one part of the seal (6).

3. Hydraulic shock absorber as claimed in Claim 1 or Claim 2, **characterised in that** the reinforcing metal sheet (7) of the seal (6) is formed of two annular metal sheets lying one on top of the other.

4. Hydraulic shock absorber as claimed in Claim 3, **characterised in that** the outer annular metal sheet (support sheet 8) extends up to the shock absorber pipe (4) and is connected thereto.

5. Hydraulic shock absorber as claimed in one or several of Claims 1 to 4, **characterised in that** the sealing and guiding unit is connected to the shock absorber pipe (4) from the exterior by means of welding and the root of the weld seam (12) is sealed towards the interior of the shock absorber by means of a mounting part.

6. Hydraulic shock absorber as claimed in Claim 5, **characterised in that** the root of the weld seam (12) is sealed towards the interior of the shock absorber by means of a metal sheet, a sealing ring (16) or a buffer (17) consisting of resilient material.

## Revendications

1. Amortisseur hydraulique avec une tige de piston plongeant de manière oscillante dans un tube d'amortisseur (4), dans lequel la tige de piston est étanchée et guidée vis-à-vis du tube d'amortisseur au moyen d'une unité d'étanchêification et de guidage en tôle, l'unité d'étanchéification et de guidage se composant d'une pièce de support (1) avec un col de guidage, qui peut recevoir un manchon de guidage (5) et d'un joint d'étanchéité (6) renforcé par une tôle, et la pièce de support (1) et/ou la tôle de renfort (7) du joint d'étanchéité (6) est réalisée en une ou plusieurs parties, au moins une partie de la pièce de support (1) étant assemblée à au moins une partie de la tôle de renfort (7), **caractérisé en ce que** l'assemblage de la pièce de support (1) avec la tôle de renfort (7) est effectué par soudage depuis l'extérieur, et **en ce que** le bourrelet du cordon de soudure est étanché vis-à-vis de l'espace interne de l'amortisseur au moyen d'un insert.

2. Amortisseur hydraulique selon la revendication 1, **caractérisé en ce que** l'étanchement du cordon de soudure vis-à-vis de l'espace interne est obtenu par une partie du joint d'étanchéité (6).

3. Amortisseur hydraulique selon la revendication 1 ou la revendication 2, **caractérisé en ce que** la tôle de renfort (7) du joint d'étanchéité (6) es formée par deux tôles annulaires disposées l'une sur l'autre.

4. Amortisseur hydraulique selon la revendication 3, **caractérisé en ce que** la tôle annulaire située à l'extérieur (tôle d'appui 8) s'étend jusqu'au tube d'amortisseur (4) et est assemblée à celui-ci.

5. Amortisseur hydraulique selon l'une ou plusieurs des revendications 1 à 4, **caractérisé en ce que** l'unité d'étanchéification et de guidage est assemblée au tube d'amortisseur (4) par soudage depuis l'extérieur, et le bourrelet du cordon de soudure (12) est étanché vis-à-vis de l'espace interne de l'amortisseur au moyen d'un insert.

6. Amortisseur hydraulique selon la revendication 5, **caractérisé en ce que** le bourrelet du cordon de soudure (12) est étanché vis-à-vis de l'espace interne de l'amortisseur au moyen d'une tôle, d'une bague d'étanchéité (16) ou d'une butée de traction (17) en matériau élastique.
